# EUROPÄISCHE PATENTSCHRIFT

(11) **EP 2 014 614 B1**
(45) Veröffentlichungstag und Bekanntmachung des Hinweises auf die Patenterteilung: **18.11.2009**
(21) Anmeldenummer: 08010277.5
(22) Anmeldetag: 05.06.2008
(51) Int. Cl.: C01B 3/36, C09C 1/48

(54) **Verfahren und Vorrichtung zur Nutzung von Russ in POX-Anlagen**
Method and device for using carbon black in POX systems
Procédé et dispositif d'utilisation de suie dans des installations POX

(30) Priorität: 26.06.2007 DE 102007029435
(43) Veröffentlichungstag der Anmeldung: 14.01.2009
(73) Patentinhaber: Linde AG, 80331 München (DE)
(72) Erfinder: Glaser, Jürgen, 82515 Wolfratshausen (DE)

(56) Entgegenhaltungen:
- DE-A1- 2 440 472
- US-A- 2 665 980
- US-A- 2 992 906
- US-A- 4 315 834

## Beschreibung

Die Erfindung betrifft ein Verfahren zur wirtschaftlichen Nutzung von Ruß aus dem Abwasser einer ersten Vergasungseinrichtung (Schweröl-POX), in der aus höher siedenden Kohlenwasserstoffen durch Partielle Oxidation ein Wasserstoff und Kohlenmonoxid enthaltendes Gas (Syntheserohgas) erzeugt wird, wobei das mit Ruß beladene Abwasser mit Naphtha vermischt und anschließend in einen Dekanter eingeleitet wird, aus dem eine weitgehend rußfreie Wasserfraktion und ein weitgehend wasserfreies Naphtha/Ruß-Gemisch getrennt abgezogen werden.

Weiterhin betrifft die Erfindung eine Vorrichtung zur Durchführung des Verfahrens.

Kohlenmonoxid und/oder Wasserstoff enthaltende Gasgemische, sog. Synthesegase, sind wichtige Ausgangsstoffe zur Herstellung einer Vielzahl von Produkten, wie Ammoniak, Methanol oder auch synthetischer Kraftstoffe. Ein in der Industrie weit verbreitetes Verfahren, mit dem in Synthesegasanlagen aus Kohlenwasserstoffen - insbesondere aus höher siedenden Kohlenwasserstoffen (Schwerölen) - Synthesegase erzeugt werden, ist die Partielle Oxidation. Hierbei wird ein im allgemeinen vorgewärmter kohlenwasserstoffhaltiger Einsatz in einer Reaktionskammer (POX-Reaktor) bei Temperaturen zwischen 1300 und 1500°C und Drücken bis zu 150bar mit Wasserdampf und einem Oxidationsmittel zu einem Syntheserohgas umgesetzt, das zu großen Teilen aus Wasserstoff (H₂). Kohlenmonoxid (CO), Kohlendioxid (CO₂) und Wasser besteht. Die für die Reaktion erforderliche Wärme wird durch unvollständige (partielle) Oxidation der im Einsatz befindlichen Kohlenwasserstoffe erzeugt. Hierzu wird dem POX-Reaktor Sauerstoff in einer Menge zugeführt, die für eine vollständige Umsetzung der Kohlenwasserstoffe nicht ausreichend ist.

Bei der Partiellen Oxidation entstehen neben gasförmigen Komponenten auch Feststoffe, wie Ruß und Asche, die aus dem Syntheserohgas entfernt werden müssen, bevor dieses weiter behandelt werden kann. Das mit einer Temperatur von mehr als 1300°C aus dem POX-Reaktor austretende Syntheserohgas wird zunächst abgekühlt und anschließend einer Wasserwäsche unterzogen. Erfolgt die Abkühlung des Syntheserohgases in direktem Kontakt mit Wasser (Quenchen), so wird bereits in diesem Verfahrensschritt ein Großteil der Feststoffe aus dem Syntheserohgas ausgewaschen und geht in das zum Quenchen verwendete Wasser (Quenchwasser) über. In der Wasserwäsche erfolgt eine Feinreinigung, bei der der Feststoffgehalt des Syntheserohgases typischer Weise auf ca. 1mg/m³ reduziert wird.

Der aus dem Syntheserohgas entfernte Ruß stellt einen wertvollen Rohstoff dar, weshalb er aus dem durch Quenchen und/oder Wasserwäsche erzeugten Abwasser abgetrennt und einer stofflichen und/oder energetischen Nutzung zugeführt wird. Sinnvoller Weise wird der Ruß als Einsatz in den POX-Reaktor zurückgeführt und dort zu Kohlenmonoxid umgesetzt. Die Wirtschaftlichkeit der Rußnutzung hängt entscheidend davoh ab, wie hoch der Aufwand für die Abtrennung des Rußes aus dem Abwasser und ggf. seiner Aufbereitung zu einem Einsatzstoff ist.

Um den Ruß einer Schweröl-POX stofflich zu nutzen, wird nach dem Stand der Technik, wie er beispielsweise in den Patentschriften US 2,992,906 und DT 24 40 472 A1 (vgl. Seite 1) beschrieben ist, das mit Ruß beladene Abwasser mit Naphtha zu einer Dispersion vermischt. Während der überwiegende Teil der im Abwasser enthaltenen Asche in der Wasserphase verbleibt, geht der Ruß, der von Naphtha wesentlich besser benetzt wird als von Wasser, nahezu vollständig in die Naphthaphase über. Die Dispersion wird anschließend in einen Dekanter eingeleitet, in der es sich in eine Ruß enthaltende Naphthafraktion und eine weitgehend rußfreie Wasserfraktion trennt. Die Ruß enthaltende Naphthafraktion wird aus dem Dekanter abgezogen und mit Schweröl gemischt. Da Naphtha nahezu doppelt so teuer ist wie Schweröl, wird um Einsatzkosten zu sparen, nach dem Stand der Technik, in einer Schweröl-POX das Naphtha aus der Dispersion wieder abgetrennt. Das so zurückgewonnene Naphtha wird rückgeführt und erneut für die Rußabtrennung eingesetzt. Zur Naphtha Abtrennung wird die Dispersion einer Destillationskolonne zugeführt, wo der größte Teil des Naphthas abdestilliert und über Kopf abgezogen wird. Im Sumpfraum der Destillationskolonne sammeln sich als Sumpfprodukt nicht abdestilliertes Naphtha und Schweröl zusammen mit Ruß und Asche. Das Sumpfprodukt wird - evtl. nach dem Abstrippen des Naphthas mit frischem Schweröl verdünnt, und als Einsatz in den Reaktor der Schweröl- POX zurückgeführt. Die rußfreie Wasserfraktion aus dem Dekanter wird entspannt, wobei im Wasser gelöste leichte Kohlenwasserstoffe in die Gasphase übergehen. Sowohl diese leichten Kohlenwasserstoff als auch das abdestillierte und das abgestrippte Naphtha werden durch Abkühlung verflüssigt, zwischengelagert und später erneut mit Ruß beladenem Abwasser gemischt. Der hohe apparative und energetische Aufwand für dieses Verfahren erhöht die Investitions- und Betriebskosten der Anlage erheblich.

Ebenso wie in einer Schweröl-POX, fällt in einer Naphtha-POX, einer Vergasungseinrichtung in der aus Naphtha durch Partielle Oxidation ein Syntheserohgas erzeugt wird, ein mit Ruß beladenes Abwasser an, aus dem nach dem Stand der Technik (z.B. US4,315,834, vgl. Spalten 1 und 2) der Ruß abgetrennt und als Einsatz in den POX-Reaktor zurückgeführt wird. Auch hier wird aus dem mit Ruß beladenen Abwasser und Naphtha eine Dispersion erzeugt, die in einen Dekanter eingeleitet und dort in eine Ruß enthaltende Naphthafraktion und eine weitgehend rußfreie Wasserfraktion getrennt wird. Die aus dem Dekanter abgezogene Ruß enthaltende Naphthafraktion wird anschließend als Einsatz in den Reaktor der Naphtha-POX zurückgeführt, während die rußfreie Wasserfraktion an eine Abwasseraufbereitungsanlage abgegeben wird. Der Aufwand für die Rußrückführung in einer Naphtha-POX ist wesentlich geringer als in einer Schweröl-POX, da das aus dem Dekanter abgezogene Naphtha/Ruß-Gemisch ohne weitere Aufbereitung in den Reaktor der Naphtha-POX eingeleitet werden kann.

Ist es notwendig, die Kapazität einer bestehenden Synthesegasanlage zu erhöhen, um die an einem Standort erzeugbare Synthesegasmenge einem steigenden Bedarf anzupassen, werden häufig eine oder mehrere zusätzliche Vergasungseinrichtungen installiert die vom selben Typ sind wie die Vergasungseinrichtung der bestehenden Synthesegasanlage. Weist die bestehende Synthesegasanlage als Vergasungseinrichtung beispielsweise eine Naphtha-POX auf, so liegt es nahe, eine weitere Naphtha-POX neu zu installieren und parallel zur bestehenden Naphtha-POX zu betreiben, da die vorhandene Infrastruktur zum Betrieb der beiden Vergasungseinrichtungen zu einem großen Teil unverändert genutzt werden kann. In der letzten Zeit haben sich die Preise für Naphtha und Schweröl deutlich auseinander entwickelt, so dass die Erweiterung einer bestehenden, mit Naphtha betriebenen Synthesegasanlage mit einer Schweröl-POX, die mit einem deutlich preisgünstigeren Schweröl betrieben werden kann, zumindest dann sinnvoll ist, wenn die Möglichkeit besteht, die Investitions- und Betriebskosten der Schweröl-POX im Vergleich zum Stand der Technik zu reduzieren.

Aufgabe der vorliegenden Erfindung ist es daher ein Verfahren der eingangs genannten Art sowie eine Vorrichtung zur Durchführung des Verfahrens anzugeben, die es erlauben, den in einer Schweröl-POX anfallenden Ruß auf wirtschaftlichere Weise zu nutzen, als dies nach dem Stand der Technik möglich ist.

Die gestellte Aufgabe wird verfahrensseitig erfindungsgemäß dadurch gelöst, dass das Naphtha/Ruß-Gemisch dem Reaktor einer weiteren Vergasungseinrichtung (Naphtha-POX) als Einsatz zugeführt wird, in der vorwiegend Naphtha durch Partielle Oxidation in ein Syntheserohgas umgesetzt wird.

Besonders dann, wenn sowohl die Schweröl- als auch die Naphtha-POX neu installiert werden, ist es sinnvoll, die mit Ruß beladenen Abwässer aus beiden Anlagen zusammenzuführen und so zu behandeln, wie das mit Ruß beladene Abwasser in einer Naphtha-POX. Das erfindungsgemäße Verfahren sieht daher vor, dass das mit Ruß beladenes Abwasser aus der Naphtha-POX gemeinsam mit dem rußbeladenen Abwasser aus der Schweröl-POX mit Naphtha gemischt und in den Dekanter eingeleitet wird.

Soll parallel zu einer bereits bestehenden Naphtha-POX eine Schweröl-POX neu installiert und betrieben werden, so wird sinnvoller Weise die vorhandene Einrichtung zur Rußrückführung der Naphtha-POX weiter genutzt. Zweckmäßiger Weise wird daher in einem derartigen Fall das mit Ruß beladene Abwasser aus der Schweröl-POX mit Naphtha gemischt und unabhängig von dem rußbeladenen Abwasser aus der Naphtha-POX in einen zweiten Dekanter eingeleitet, aus dem eine weitgehend rußfreie Wasserfraktion und ein weitgehend wasserfreies Naphtha/Ruß-Gemisch getrennt abgezogen werden, wobei das Naphtha/Ruß-Gemisch dem Reaktor der Naphtha-POX als Einsatz zugeführt wird.

Während der Synthesegasproduktion können Störungen in der Naphtha-POX dazu führen, dass zumindest ein Teil oder sogar die gesamte Menge des bei der Behandlung des rußbeladenen Abwassers aus der Schweröl-POX anfallenden Naphtha/Ruß-Gemisches nicht als Einsatz dem Reaktor der Naphtha-POX zugeführt werden kann. Um zu vermeiden, dass bei derartigen Betriebsverhältnissen die Leistung der Schweröl-POX reduziert werden muss, um die Menge des erzeugten an die Menge des in der Naphtha-POX einsetzbaren Naphtha/Ruß-Gemisches anzupassen, sieht eine zweckmäßige Ausgestaltung des erfindungsgemäßen Verfahrens vor, dass der Teil des durch Abwasseraufbereitung erzeugten Naphtha/Ruß-Gemisches, der aufgrund einer vorübergehenden Leistungsreduzierung der Naphtha-POX nicht als Einsatz in den Reaktor der Naphtha-POX eingeleitet werden kann, solange zwischengespeichert wird, bis die Betriebsverhältnisse seinen Einsatz in der Naphtha-POX erlauben.

Weiterhin betrifft die Erfindung eine Vorrichtung zur stofflichen Nutzung von Ruß aus dem Abwasser einer Vergasungseinrichtung (Schweröl-POX), in der aus höher siedenden Kohlenwasserstoffen durch Partielle Oxidation ein Wasserstoff und Kohlenmonoxid enthaltendes Gas (Syntheserohgas) erzeugt wird, aufweisend eine Mischeinrichtung, in der aus dem mit Ruß beladenen Abwasser aus der Schweröl-POX und Naphtha eine Dispersion erzeugbar ist, sowie einen Dekanter, in den die in der Mischeinrichtung erzeugte Dispersion einleitbar und aus dem eine weitgehend rußfreie Wasserfraktion und ein weitgehend wasserfreies Naphtha/Ruß-Gemisch getrennt abziehbar sind.

Vorrichtungsseitig wird die gestellte Aufgabe dadurch gelöst, dass sie eine zweite Vergasungseinrichtung (Naphtha-POX) umfasst, in der vorwiegend Naphtha durch Partielle Oxidation in ein Syntheserohgas umgesetzt wird, in deren Reaktor das weitgehend wasserfreie Naphtha/Ruß-Gemisch aus dem Dekanter als Einsatz einleitbar ist.

Handelt es sich sowohl bei der Naphtha-POX als auch bei der Schweröl-POX um Neuinstallationen, so sieht eine bevorzugte Ausgestaltung der erfindungsgemäßen Vorrichtung eine Mischeinrichtung vor, in der aus den mit Ruß beladenen Abwässern aus der Naphtha- und der Schweröl-POX und Naphtha eine Dispersion erzeugbar ist, die in den Dekanter einleitbar ist.

Soll parallel zu einer bereits bestehenden Naphtha-POX eine Schweröl-POX neu installiert und betrieben werden, so wird sinnvoller Weise die vorhandene Einrichtung zur Rußrückführung der Naphtha-POX weiter genutzt. Für diesen Fall sieht ein zweckmäßige Ausgestaltung der erfindungsgemäßen Vorrichtung vor, dass sie eine zweite Mischeinrichtung, in der aus dem mit Ruß beladenen Abwasser aus der Schweröl-POX und Naphtha eine Dispersion erzeugbar ist, sowie einen zweiten Dekanter, in den die in der zweiten Mischeinrichtung erzeugte Dispersion einführbar und aus dem ein weitgehend wasserfreies Naphtha/Ruß-Gemisch abziehbar und in die Naphtha-POX als Einsatz einleitbar ist, umfasst.

Die erfindungsgemäße Vorrichtung weiterbildend, wird vorgeschlagen, dass sie eine Speichereinrichtung zur Zwischenspeicherung eines Teils des Naphtha/Ruß-Gemisches umfasst, der aufgrund einer vorübergehenden Leistungsreduzierung der Naphtha-POX nicht als Einsatz in den Reaktor der Naphtha-POX einleitbar ist. Die Speichereinrichtung ist vorzugsweise so dimensioniert, dass sie die gesamte Menge des Naphtha/Ruß-Gemisches, die in der mit Nennleistung arbeitenden Schweröl-POX anfällt, während eines Zeitraums von ein bis zwei Tagen aufnehmen kann.

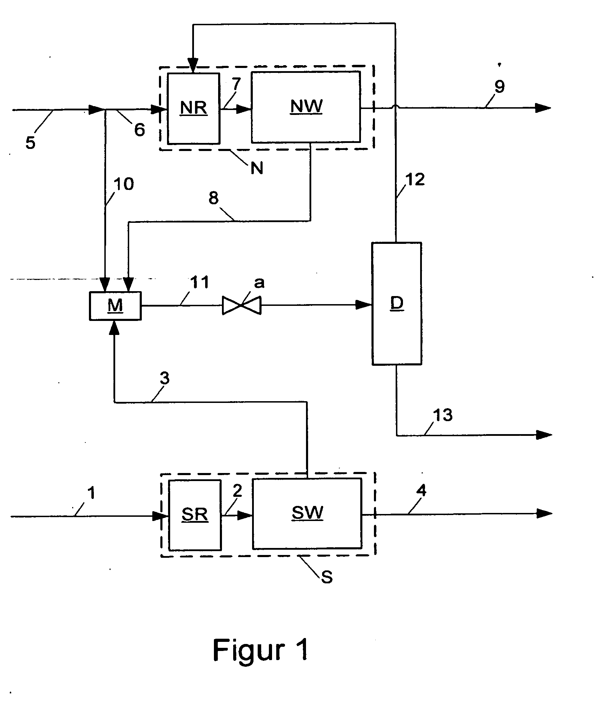

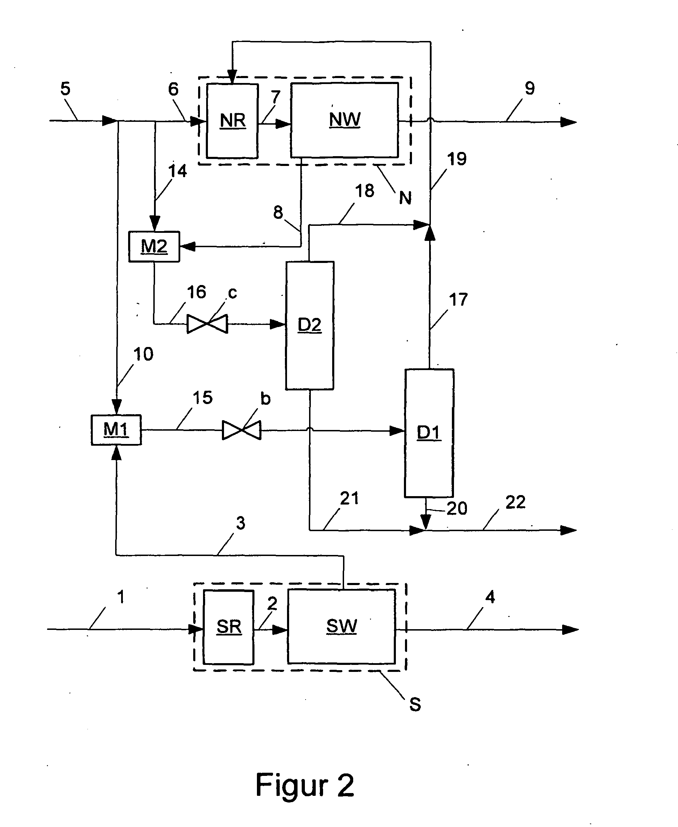

Im Folgenden soll die Erfindung anhand zweier, in den Figuren 1 und 2 schematisch dargestellter Ausführungsbeispiele näher erläutert werden. In den beiden Figuren sind gleiche Anlagenteile bzw. Verfahrensströme durch gleiche Bezugsziffern bezeichnet.

In beiden Ausführungsbeispielen wird jeweils eine Vorrichtung zur Erzeugung von Syntheserohgas beschrieben, die aus einer Schweröl-POX (S) und einer dazu parallel betriebenen Naphtha-POX (N) besteht.

Über die Leitung 1 wird dem Reaktor SR der Schweröl-POX S ein aus höher siedenden Kohlenwasserstoffen bestehender Einsatz (Schweröl) zugeführt, der mit Sauerstoff und Wasserdampf durch Partielle Oxidation zu einem vor allem Wasserstoff und Kohlenmonoxid, aber auch Ruß enthaltenden ersten Syntheserohgas 2 umgesetzt wird. In der Wascheinrichtung SW wird der Ruß mittels Wasser aus dem ersten Syntheserohgas 2 weitgehend ausgewaschen, wobei ein erster rußbeladener Abwasserstrom 3 sowie ein erster weitgehend rußfreier Syntheserohgastrom 4 erzeugt werden. Der rußbeladene Abwasserstrom 3 wird anschließend der Mischeinrichtung M zugeführt.

Aus dem Naphthastrom 5 wird ein Teil 6 abgezweigt und dem Reaktor NR der Naphtha-POX N als Einsatz zugeführt, wo er mit Sauerstoff und Wasserdampf durch Partielle Oxidation zu einem vor allem Wasserstoff und Kohlenmonoxid, aber auch Ruß enthaltenden zweiten Syntheserohgas 7 umgesetzt wird. In der Wascheinrichtung NW wird der Ruß mittels Wasser aus dem zweiten Syntheserohgas 7 weitgehend ausgewaschen, wobei ein zweiter rußbeladener Abwasserstrom 8 sowie ein zweiter weitgehend rußfreier Syntheserohgastrom 9 erzeugt werden. Der zweite rußbeladene Abwasserstrom 8 wird anschließend gemeinsam mit dem aus dem Naphthastrom 5 abgezweigten Naphthastrom 10 ebenfalls der Mischeinrichtung M zugeführt.

In der Mischeinrichtung M wird aus den beiden rußbeladenen Abwasserströmen 3 und 8 sowie dem Naphthastrom 10 eine Dispersion 11 erzeugt und über das Mischventil a in den Dekanter D eingeleitet. Nach einer Verweilzeit von typischer Weise 2 bis 5 Minuten, werden vom Kopf des Dekanters D ein weitgehend wasserfreies Naphtha/Ruß Gemisch 12 und über dessen Boden eine weitgehend rußfreie Wasserfraktion 13 abgezogen. Das Naphtha/Ruß-Gemisch 12 wird vor die Naphtha-POX N zurückgeführt und dem Reaktor NR ebenfalls als Einsatz zugeführt.

Im zweiten Ausführungsbeispiel ist eine Variante der Erfindung dargestellt, wie sie vorzugsweise dann verwirklicht wird, wenn parallel zu einer bereits bestehenden Naphtha-POX N eine Schweröl-POX S neu installiert wird. Aus wirtschaftlichen Gründen wird das vorhandene System zur Behandlung von rußbeladenem Abwasser aus den Naphtha-POX N beibehalten und weiter betrieben.

Über die Leitung 1 wird dem Reaktor SR der Schweröl-POX S ein aus höher siedenden Kohlenwasserstoffen bestehender Einsatz (Schweröl) zugeführt, der mit Sauerstoff und Wasserdampf durch Partielle Oxidation zu einem vor allem Wasserstoff und Kohlenmonoxid, aber auch Ruß enthaltenden ersten Syntheserohgas 2 umgesetzt wird. In der Wascheinrichtung SW wird der Ruß mittels Wasser aus dem ersten Syntheserohgas 2 weitgehend ausgewaschen, wobei ein erster rußbeladener Abwasserstrom 3 sowie ein erster weitgehend rußfreier Syntheserohgastrom 4 erzeugt werden. Der rußbeladene Abwasserstrom 3 wird anschließend der Mischeinrichtung M1 zugeführt, in der mit dem aus dem Naphthastrom 5 abgezweigten Naphthastrom 10 zu einer ersten Dispersion 15 vermischt wird, die nachfolgend über das Mischventil b in den Dekanter D1 eingeleitet wird.

Der aus dem Naphthastrom 5 abgezweigte Teilstrom 6 wird dem Reaktor NR der Naphtha-POX N als Einsatz zugeführt, wo er mit Sauerstoff und Wasserdampf durch Partielle Oxidation zu einem vor allem Wasserstoff und Kohlenmonoxid, aber auch Ruß enthaltenden zweiten Syntheserohgas 7 umgesetzt wird. In der Wascheinrichtung NW wird der Ruß mittels Wasser aus dem zweiten Syntheserohgas 7 weitgehend ausgewaschen, wobei ein zweiter rußbeladener Abwasserstrom 8 sowie ein zweiter weitgehend rußfreier Syntheserohgastrom 9 erzeugt werden. Der zweite rußbeladene Abwasserstrom 8 wird anschließend gemeinsam mit dem aus dem Naphthastrom 5 abgezweigten Naphthastrom 14 der Mischeinrichtung M2 zugeführt und dort zu einer zweiten Dispersion 16 umgesetzt, die nachfolgend über das Mischventil c in den Dekanter D2 eingeleitet wird.

Nach Verweilzeiten von typischer Weise 2 bis 5 Minuten, werden vom Kopf des Dekanters D1 sowie vom Kopf des Dekanters D2 weitgehend wasserfreie Naphtha/Ruß-Gemisch 17 und 18 abgezogen, in die Leitung 19 eingeleitet und gemeinsam vor die Naphtha-POX N zurückgeführt und dem Reaktor NR ebenfalls als Einsatz aufgegeben. Über den Boden des Dekanters D1 sowie den Boden des Dekanters D2 werden weitgehend rußfreie Wasserfraktionen 20 und 21 abgezogen und über Leitung 22 abgeführt.

## Patentansprüche

1. Verfahren zur wirtschaftlichen Nutzung von Ruß aus dem Abwasser einer ersten als Schweröl- POX bezeichneten Vergasungseinrichtung, in der aus höher siedenden Kohlenwasserstoffen durch Partielle Oxidation ein Wasserstoff und Kohlenmonoxid enthaltendes Syntheserohgas erzeugt wird, wobei das mit Ruß beladene Abwasser mit Naphtha vermischt und anschließend in einen Dekanter eingeleitet wird, aus dem eine weitgehend rußfreie Wasserfraktion und ein weitgehend wasserfreies Naphtha/Ruß-Gemisch getrennt abgezogen werden, **dadurch gekennzeichnet, dass** das Naphtha/Ruß-Gemisch dem Reaktor einer zweiten als Naphtha- POX bezeichneten Vergasungseinrichtung als Einsatz zugeführt wird, in der vorwiegend Naphtha durch Partielle Oxidation in ein Syntheserohgas umgesetzt wird.

2. Verfahren nach Anspruch 1, **dadurch gekennzeichnet, dass** mit Ruß beladenes Abwasser aus der Naphtha-POX gemeinsam mit dem rußbeladenen Abwasser aus der Schweröl-POX mit Naphtha gemischt und in den Dekanter eingeleitet wird.

3. Verfahren nach Anspruch 1, **dadurch gekennzeichnet, dass** das mit Ruß beladene Abwasser aus der Naphtha-POX mit Naphtha gemischt und unabhängig von dem rußbeladenen Abwasser aus der Schweröl-POX in einen zweiten Dekanter eingeleitet wird, aus dem eine weitgehend rußfreie Wasserfraktion und ein weitgehend wasserfreies Naphtha/Ruß-Gemisch getrennt abgezogen werden, wobei das Naphtha/Ruß-Gemisch dem Reaktor der Naphtha-POX als Einsatz zugeführt wird.

4. Verfahren nach einem der Ansprüche 1 bis 3, **dadurch gekennzeichnet, dass** der Teil des Naphtha/Ruß-Gemisches, der aufgrund einer vorübergehenden Leistungsreduzierung der Naphtha-POX nicht als Einsatz in den Reaktor der Naphtha-POX eingeleitet werden kann, solange zwischengespeichert wird, bis die Betriebsverhältnisse seinen Einsatz in der Naphtha-POX erlauben.

5. Vorrichtung zur stofflichen Nutzung von Ruß aus dem Abwasser einer als Schweröl- POX bezeichneten Vergasungseinrichtung, in der aus höher siedenden Kohlenwasserstoffen durch Partielle Oxidation ein Wasserstoff und Kohlenmonoxid enthaltendes Syntheserohgas erzeugt wird, aufweisend eine Mischeinrichtung, in der aus dem mit Ruß beladenen Abwasser aus der Schweröl- POX und Naphtha eine Dispersion erzeugbar ist, sowie einen Dekanter, in den die in der Mischeinrichtung erzeugte Dispersion einleitbar und aus dem eine weitgehend rußfreie Wasserfraktion und ein weitgehend wasserfreies Naphtha/Ruß-Gemisch getrennt abziehbar sind, **dadurch gekennzeichnet, dass** sie eine zweite als Naphtha- POX bezeichnete Vergasungseinrichtung umfasst, in der vorwiegend Naphtha durch Partielle Oxidation in ein Syntheserohgas umgesetzt wird, in deren Reaktor das weitgehend wasserfreie Naphtha/Ruß-Gemisch aus dem Dekanter als Einsatz einleitbar ist.

6. Vorrichtung nach Anspruch 5, **dadurch gekennzeichnet, dass** mit Ruß beladenes Abwasser aus der Naphtha-POX in die Mischeinrichtung einleitbar und dort gemeinsam mit dem Ruß beladenen Abwasser aus der Schweröl-POX mit Naphtha mischbar ist.

7. Vorrichtung nach einem der Ansprüche 5 oder 6, **dadurch gekennzeichnet, dass** sie eine Speichereinrichtung zur Zwischenspeicherung eines Teils des Naphtha/Ruß-Gemisches umfasst, der aufgrund einer vorübergehenden Leistungsreduzierung der Naphtha-POX nicht als Einsatz in den Reaktor der Naphtha-POX einleitbar ist.

## Claims

1. Method for the economic use of carbon black from the wastewater of a first gasification appliance which is designated heavy oil-POX in which a hydrogen- and carbon-monoxide-containing crude synthesis gas is generated from higher-boiling hydrocarbons by partial oxidation, wherein the carbon-black-loaded wastewater is mixed with naphtha and subsequently introduced into a decanter from which a substantially carbon-black-free water fraction and a substantially water-free naphtha/carbon black mixture are taken off separately, **characterized in that** the naphtha/carbon black mixture is fed as feed to the reactor of a second gasification appliance designated naphtha-POX in which naphtha is predominantly converted into crude synthesis gas by partial oxidation.

2. Method according to Claim 1, **characterized in that** carbon-black-loaded wastewater from the naphtha-POX together with the carbon-black-loaded wastewater from the heavy oil-POX is mixed with naphtha and introduced into the decanter.

3. Method according to Claim 1, **characterized in that** the carbon-black-loaded wastewater from the naphtha-POX is mixed with naphtha and, independently of the carbon-black-loaded wastewater from the heavy oil-POX, is introduced into a second decanter from which a substantially carbon-black-free water fraction and a substantially water-free naphtha/carbon black mixture are taken off separately, wherein the naphtha/carbon black mixture is fed as feed to the reactor of the naphtha-POX.

4. Method according to any one of Claims 1 to 3, **characterized in that** the part of the naphtha/carbon black mixture which, owing to a temporary output reduction of the naphtha-POX, cannot be introduced as feed into the reactor of the naphtha-POX, is stored temporarily until the operating conditions permit use thereof in the naphtha-POX.

5. Device for the material use of carbon black from the wastewater of a gasification appliance designated heavy oil-POX in which a hydrogen- and carbon-monoxide-containing crude synthesis gas is generated from higher-boiling hydrocarbons by partial oxidation, having a mixing appliance in which a dispersion can be generated from the carbon-black-loaded wastewater from the heavy oil-POX and naphtha, and also a decanter into which the dispersion generated in the mixing appliance can be introduced and from which a substantially carbon-black-free water fraction and a substantially water-free naphtha/carbon black mixture can be taken off separately, **characterized in that** it comprises a second gasification appliance designated naphtha-POX in which naphtha is predominantly converted into a crude synthesis gas by partial oxidation, in the reactor of which the substantially water-free naphtha/carbon black mixture can be introduced as feed from the decanter.

6. Device according to Claim 5, **characterized in that** carbon-black-loaded wastewater from the naphtha-POX can be introduced into the mixing appliance and there, together with the carbon-black-loaded wastewater from the heavy oil POX, can be mixed with naphtha.

7. Device according to any one of Claims 5 or 6, **characterized in that** it comprises a storage appliance for temporary storage of a part of the naphtha/carbon black mixture which, owing to a temporary output reduction of the naphtha-POX, cannot be introduced as feed into the reactor of the naphtha-POX.

## Revendications

1. Procédé pour l'utilisation rentable du noir de carbone provenant des eaux résiduaires d'une première installation de gazéification appelée POX d'huile lourde, dans laquelle un gaz brut de synthèse contenant de l'hydrogène et du monoxyde de carbone est généré à partir d'hydrocarbures à plus haute ébullition par oxydation partielle, les eaux résiduaires chargées en noir de carbone étant mélangées à du naphta, puis introduites ensuite dans un décanteur, à partir duquel sont soutirés séparément une fraction d'eau largement exempte de noir de carbone et un mélange noir de carbone/naphta largement exempt d'eau, **caractérisé en ce que** le mélange noir de carbone/naphta est alimenté en tant que charge vers le réacteur d'une deuxième installation de gazéification appelée POX de naphta, dans laquelle essentiellement du naphta est transformé en gaz brut de synthèse par oxydation partielle.

2. Procédé selon la revendication 1, **caractérisé en ce que** des eaux résiduaires chargées en noir de carbone issues de la POX de naphta sont mélangées ensemble avec les eaux résiduaires chargées de noir de carbone issues de la POX d'huile lourde et introduites dans le décanteur.

3. Procédé selon la revendication 1, **caractérisé en ce que** les eaux résiduaires chargées de noir de carbone issues de la POX de naphta sont mélangées à du naphta et introduites indépendamment des eaux résiduaires chargées de noir de carbone issues de la POX d'huile lourde dans un deuxième décanteur, à partir duquel sont soutirés séparément une fraction d'eau largement exempte de noir de carbone et un mélange noir de carbone/naphta largement exempt d'eau, le mélange noir de carbone/naphta étant alimenté en tant que charge vers le réacteur de la POX de naphta.

4. Procédé selon l'une quelconque des revendications 1 à 3, **caractérisé en ce que** la part du mélange noir de carbone/naphta qui du fait d'une réduction de puissance passagère de la POX de naphta ne peut pas être introduite en tant que charge dans le réacteur de la POX de naphta est stocké de façon intermédiaire jusqu'à ce que les conditions de fonctionnement permettent son utilisation dans la POX de naphta.

5. Dispositif pour l'utilisation matérielle de noir de carbone provenant des eaux résiduaires d'une installation de gazéification appelée POX d'huile lourde, dans laquelle un gaz brut de synthèse contenant de l'hydrogène et du monoxyde de carbone est généré à partir d'hydrocarbures à plus haute ébullition par oxydation partielle, comportant un dispositif de mélange dans lequel à partir des eaux résiduaires chargées de noir de carbone issues de la POX d'huile lourde et du naphta peut être créée une dispersion, ainsi qu'un décanteur dans lequel la dispersion créée dans le dispositif de mélange peut être introduite et à partir duquel une fraction d'eau largement exempte de noir de carbone et un mélange noir de carbone/naphta largement exempt d'eau peuvent être soutirés séparément, **caractérisé en ce qu'**il comprend une deuxième installation de gazéification appelée POX de naphta, dans laquelle essentiellement du naphta est transformé en un gaz brut de synthèse par oxydation partielle, dans le réacteur de laquelle le mélange noir de carbone/naphta largement exempt d'eau issu du décanteur peut être introduit en tant que charge.

6. Dispositif selon la revendication 5, **caractérisé en ce que** les eaux résiduaires chargées de noir de carbone issues de la POX de naphta peuvent être introduites dans le dispositif de mélange pour y être mélangées avec du naphta, ensemble avec les eaux résiduaires chargées de noir de carbone issues de la POX d'huile lourde.

7. Dispositif selon l'une quelconque des revendications 5 ou 6, **caractérisé en ce qu'**il comprend un dispositif de stockage, pour le stockage intermédiaire d'une partie du mélange noir de carbone/naphta, qui du fait d'une réduction de puissance passagère de la POX de naphta ne peut pas être introduite en tant que charge dans le réacteur de la POX de naphta.
